Europäisches Patentamt

European Patent Office

Office européen des brevets

(19)

(11) Veröffentlichungsnummer: **0 208 350**
**B1**

(12) **EUROPÄISCHE PATENTSCHRIFT**

(45) Veröffentlichungstag der Patentschrift:
20.09.89

(51) Int. Cl.⁴: **G 03 B 42/02**

(21) Anmeldenummer: 86200980.0

(22) Anmeldetag: 05.06.86

(54) Röntgenzielgerät mit einer Messvorrichtung zur Bestimmung des Formates einer Kassette.

(30) Priorität: 07.06.85 DE 3520422

(43) Veröffentlichungstag der Anmeldung:
14.01.87 Patentblatt 87/03

(45) Bekanntmachung des Hinweises auf die Patenterteilung: 20.09.89 Patentblatt 89/38

(84) Benannte Vertragsstaaten:
DE FR GB NL

(56) Entgegenhaltungen:
EP--A-- 0 048 382
DE--A-- 1 522 179
US--A-- 3 986 034

(73) Patentinhaber: Philips Patentverwaltung GmbH
Wendenstrasse 35 Postfach 10 51 49
D-2000 Hamburg 1 (DE)
DE
N.V. Philips' Gloeilampenfabrieken
Groenewoudseweg 1
NL-5621 BA Eindhoven (NL)
FR GB NL

(72) Erfinder: Schwieker, Horst-Hartwig
Trenknerweg 21
D-2000 Hamburg 52 (DE)

(74) Vertreter: Hartmann, Heinrich, Dipl.-Ing. et al
Philips Patentverwaltung GmbH Wendenstrasse 35
Postfach 10 51 49
D-2000 Hamburg 1 (DE)

Jouve, 18, rue St-Denis, 75001 Paris, France

## Beschreibung

Die Erfindung betrifft ein Röntgenzielgerät nach dem Oberbegriff des Anspruchs 1. Ein solches Gerät ist im wesentlichen aus der EP-A 48 382 bekannt. Allerdings handelt es sich dabei nicht um ein Röntgenzielgerät, sondern um die Röntgenaufnahmeeinrichtung eines sogenannten Bucky-Arbeitsplatzes. Dabei besitzen die Spannvorrichtungen zwei Spannbackenpaare, mit denen jeweils eine Marke verbunden ist, wobei die Marke für die vertikal bewegbaren Spannbacken über eine Umlenkrolle geführt ist. Beim Verfahren des Kassettenwagens fahren die Marken an dem Sensor einer Meßvorrichtung vorbei, die aus den mittels des Sensors ermittelten Abständen der Marken von einer fest mit dem Kassettenwagen verbundenen Referenzmarke das Kassettenformat bestimmt.

Es ist Aufgabe der vorliegenden Erfindung, ein Röntgenzielgerät der eingangs genannten Art zu schaffen, das ebenfalls mit nur einer Meßvorrichtung das Format, d. h. die Höhe und die Breite der jeweils eingelegten Kassette bestimmt. Diese Aufgabe wird erfindungsgemäß durch die im Kennzeichen des Anspruchs 1 angegebenen Maßnahmen gelöst.

Bei der Erfindung wird also die durch das Kassettenformat bestimmte Stellung der beiden Spannvorrichtungen in eine entsprechende Winkelstellung der damit schwenkbar gekoppelten Marken umgesetzt. Diese Marken passieren beim Verfahren des Kassettenwagens den Sensor je nach Kassettenformat früher oder später, so daß das Ausgangssignal des Sensors dann nur anspricht, wenn die Marke beim Vorüberfahren ihm unmittelbar gegenübersteht, die zur Bestimmung des Kassettenformats erforderliche Information enthält. Die Schwinge hat dabei noch die weitere Funktion, das erste Spannbackenpaar gleichmäßig und gleichsinnig relativ zueinander zu bewegen.

Die Erfindung wird nachstehend anhand der Zeichnung näher erläutert. Es zeigen :

Fig. 1 eine schematische Darstellung eines erfindungsgemäßen Röntgenzielgerätes,

Fig. 2a bis 2c die Stellung der beiden Marken bei verschiedenen Kassettenformaten,

Fig. 3a bis 3c die sich dabei ergebenden Sensorausgangssignale und

Fig. 4 eine Schaltung zur Verarbeitung der Sensorsignale und zur Bestimmung des Kassettenformates.

In dem Röntgenzielgerät 1 — von dem der Übersichtlichkeit halber nur die äußere Kontur angedeutet ist — befindet sich ein Kassettenwagen 2, der längs horizontal verlaufender führungsschienen 3 und 4 in horizontaler Richtung mittels eines Elektromotors 5, vorzugsweise eines Schrittmotors, verfahrbar ist. Der Kassettenwagen 2 trägt außerdem einen in vertikaler Richtung verfahrbaren Hilfswagen 6, wobei der Begriff vertikal sich auf die Verhältnisse an einem das Röntgenzielgerät tragenden vertikal stehenden Röntgenuntersuchungsgerät bezieht. Das Verfahren des Hilfswagens erfolgt in bekannter Weise mittels eines Motors 7, der auf einen Antriebsriemen einwirkt, der über Rollen am Zielgerät, am Kassettenwagen 2 und am Hilfswagen 6 geführt ist.

An dem Hilfswagen 6 ist eine Schwinge 8 um eine zur Zeichenebene (und damit zur « horizontalen » und zur « vertikalen » Richtung) senkrechte Achse schwenkbare Schwinge 8 angeordnet, an deren beiden Armen je eine Spannbacke 9a bzw. 9b derart angelenkt ist, daß bei einer Schwenkbewegung der Schwinge 8 die beiden Spannbacken 9a und 9b gleichsinnig und jeweils um die gleiche Strecke aufeinander zu bzw. voneinander weg bewegt werden. Diese Spannbacken werden mittels einer Zugfeder 10 nach dem Einlegen einer Kassette 11, die in der Zeichnung der Übersichtlichkeit halber nur mit gestrichelten Linien dargestellt ist, gegen die obere und die untere Kante gedrückt. Die Stellung der beiden Spannbacken 9a und 9b, d. h. ihr Abstand, wird daher durch die Höhe der eingelegten Kassette bestimmt.

Um die gleiche Achse 12, um die die Schwinge 8 schwenkbar ist, ist auch noch ein Hebel 13 schwenkbar, der mittels einer Zugfeder 14 gegen den rechten Rand der Kassette gedrückt wird. Beim Einlegen der Kassette wird dieser Hebel daher so lange nach rechts geschwenkt, bis eine an der unteren Spannbacke 9b befestigte Riegelnase 15 hinter dem linken Rand der Kassette eingreift. Die Winkelstellung, die der Hebel 13 jeweils einnimmt, ist daher ein Maß für die Breite der Kassette.

Mit der Schwinge 8 ist eine Marke in Form eines Zeigers 16 fest verbunden. Ebenso ist mit dem Hebel 13 eine weitere Marke in Form eines Sektors 17 verbunden, der mit einem bogenförmigen Fenster 18 versehen ist. Die beiden Marken haben eine Oberfläche mit einem hohen optischen Reflexionskoeffizienten, die beispielsweise durch Vergoldung erhalten werden kann, während die übrigen Teile des Kassettenwagens einen wesentlich geringeren Reflexionskoeffizienten haben.

Beim Verfahren des Kassettenwagens mittels des Schrittmotors 5 aus der in der Zeichnung dargestellten Ladestellung nach rechts in die Parkstellung, passieren die beiden Marken einen Optoreflektor 19, der fest mit dem Röntgenzielgerät 1 verbunden ist und der sich in einer zur Zeichenebene parallelen Ebene befindet, die einen geringen Abstand von den Ebenen aufweist, in denen sich die Marken 16 und 17 bewegen. Der Optoreflektor 19 liefert ein Signal, dessen Amplitude stark zunimmt, wenn sich die Marken 17 und 16 unmittelbar unter ihm befinden. Da die Winkelstellung der Marken 16 und 17, wie bereits erwähnt, von der Höhe und der Breite der Kassette 11 bestimmt wird und da der Verlauf des Ausgangssignals des Optoreflektors beim Verfahren des Kassettenwagens in die Parkstellung als Funktion der Fahrzeit der Kassette (bei vorgegebenen Geschwindigkeitsverlauf) bzw. als Funktion des Fahrweges der Kassette von der Winkelstellung der beiden Marken 16 und 17 abhängt, wird der Verlauf des Ausgangssignals des optischen Sensors 19 durch Höhe und Breite der eingelegten Kassette bestimmt. Aus dem Verlauf des Ausgangssignals des Optoreflektors läßt sich also das Kassettenformat, d. h. Höhe und Breite der Kassette bestimmen.

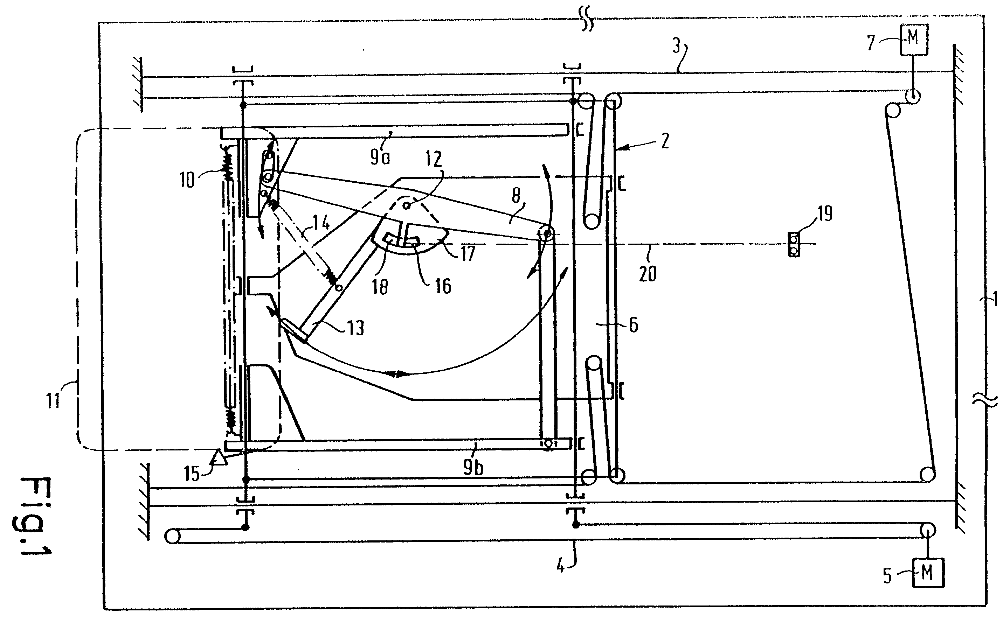

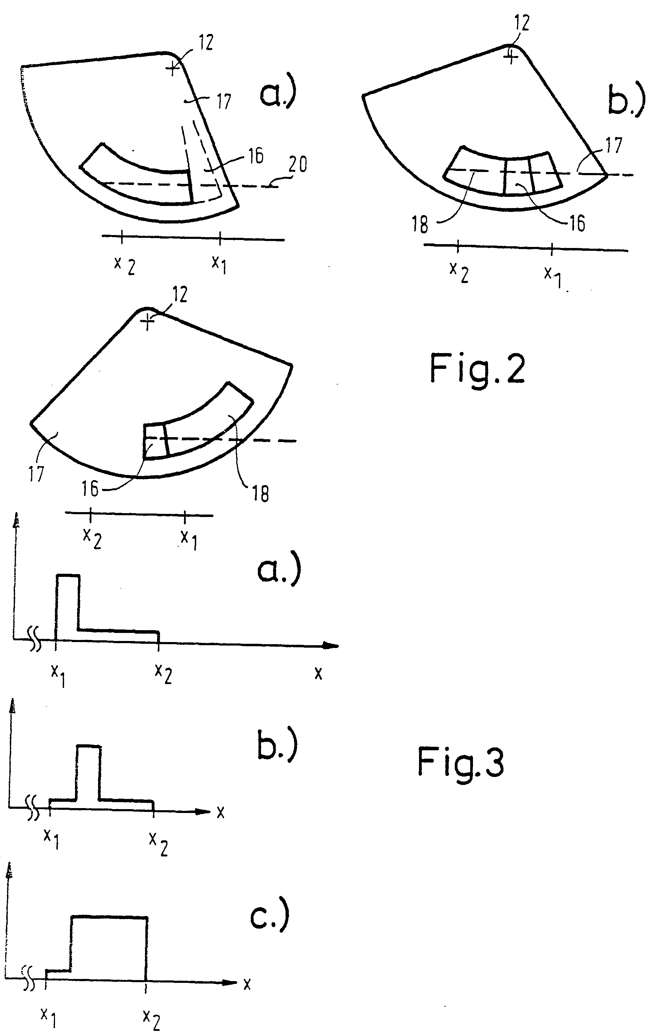

Zur Erläuterung dieses Sachverhaltes sind in den Fig. 2 und 3 die Winkelstellungen der Marken 16 und 17 und die zugehörigen Signalverläufe für verschiedene Kassettenformate dargestellt. Fig. 2a zeigt die Stellung der Marken 16 und 17 nach dem Einlegen einer Kassette für das kleinste Filmformat (13 cm breit, 18 cm hoch). Der Hebel 13 befindet sich dabei relativ weit links, und das gleiche gilt für die damit verbundene sektorförmige Marke 17. Der Zeiger 16 hingegen befindet sich dabei relativ weit rechts, und zwar so weit, daß er nicht in das bogenförmige Fenster 18 hineinragen kann. Die Linie 20 bezeichnet dabei die Höhe, auf der sich der Optoreflektor befindet. Beim Vorbeifahren des Kassettenwagens « sieht » der Optoreflektor daher zunächst den stark reflektierenden Bereich der Marke 17 rechts vom Fenster 18, dann das nicht reflektierende Fenster 18 und schließlich wieder einen Teil der Marke 17. Das zugehörige Ausgangssignal des Optoreflektors ist in Fig. 3a dargestellt, wobei die Darstellung auf einen Ausschnitt zwischen den Fahrwegen $x_1$ und $x_2$ ($x_2$ $x_1$) beschränkt ist, der symmetrisch zu dem Fahrweg ($0{,}5$ $x_2-x_1$) gewählt ist, bei dem die Schwenkachse 12 der Marken 16, 17 gerade in einer durch den Optoreflektor 19 (Fig. 1) und senkrecht zur Zeichenebene verlaufende Ebene liegt. Die Breite dieses Ausschnittes ist so gewählt, daß der zu diesem Ausschnitt korrespondierende Signalverlauf des Optoreflektors für jedes Kassettenformat anders ist.

Fig. 2b zeigt die Winkelstellung der Marken 16 und 17 beim Einlegen einer Kassette für einen Film von 18 cm Breite und 24 cm Höhe. Aufgrund der größeren Breite ist die Marke 17 gegenüber der Stellung nach Fig. 2a um einen gewissen Winkel im Gegenuhrzeigersinn geschwenkt, während der Zeiger 16 aufgrund der vergrößerten Kassettenhöhe im Uhrzeigersinn geschwenkt worden ist, so daß er sich nunmehr in dem bogenförmigen Fenster 18 befindet. Beim Verfahren des Kassettenformates « sieht » der Optoreflektor also zunächst im ersten Viertel des Ausschnittes ($x_1$, $x_2$) einen Teil des nicht reflektierenden bogenförmigen Fensters 18, im zweiten Viertel des Ausschnittes den stark reflektierenden Zeiger 16 und in den beiden letzten Vierteln des Ausschnittes wieder das nicht reflektierende Fenster 18. Während also der Optoreflektor bei der 13 x 18 Kassette während des ersten Viertels des Ausschnittes $x_1$, $x_2$ ein Signal mit hoher Amplitude liefert, erscheint beim Format 18 x 24 das Signal mit hoher Amplitude während des zweiten Viertels des Ausschnittes.

In Fig. 2c sind die Winkelstellungen der Marken 16 und 17 dargestellt, die sich ergeben, wenn eine Kassette für ein 24 cm hohes und 30 cm breites Filmformat eingelegt ist. Die Kassette hat also die gleiche Höhe wie die bei Fig. 2b verwendete Kassette, weshalb sich der mit den Spannbacken 9a und 9b gekoppelte Zeiger 16 in der gleichen Position befindet wie in Fig. 2b, d. h. in einer Position, in der seine linke Kante gerade mit der Mitte des Ausschnittes $x_1$, $x_2$ zusammenfällt. Auf der anderen Seite ist wegen der wesentlich größeren Breite der Kassette die mit dem Hebel 13 gekoppelte Marke 17 um einen erheblichen Winkel im Gegenuhrzeigersinn um die Achse 12 geschwenkt, so daß der linke Rand des Fensters 18 mit der Mitte des Ausschnittes $x_1$, $x_2$ zusammenfällt. Der Optoreflektor erfaßt also hierbei im ersten Viertel das Fenster 18 (keine bzw. niedrige Reflexion), im zweiten Viertel den Zeiger 16 (hohe Reflexion) und im dritten und vierten Viertel des Ausschnittes den Bereich hoher Reflexion auf dem sektorförmigen Ausschnitt 17. Es ergibt sich daher der in Fig. 3c dargestellte Signalverlauf. Auf diese Weise lassen sich den verschiedenen Kassettenformaten (z. B. nach DIN 6832) verschiedene Signalverläufe umkehrbar eindeutig zuordnen, so daß aus dem Signalverlauf (während des Ausschnittes $x_1$, $x_2$) das Kassettenformat eindeutig bestimmt werden kann.

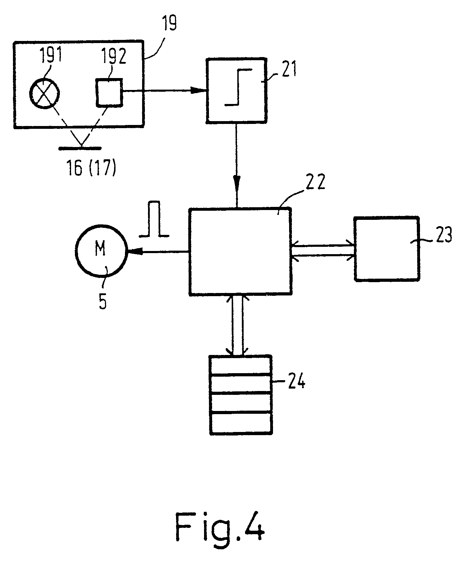

Fig. 4 zeigt in einem Blockschaltbild eine Schaltung zur Erfassung und Verarbeitung des Signalverlaufs. Der Optoreflektor enthält eine Lichtquelle 191, z. B. eine lichtemittierende Diode, und einen Wandler 192, der das von einer der Marken 16 bzw. 17 reflektierte Licht in ein elektrisches Signal umsetzt, z. B. eine Fotodiode. Das von diesem Wandler gelieferte Signal wird — gegebenenfalls nach Verstärkung — einer Schwellwertschaltung 21 zugeführt, deren Ausgangssignal einen ersten Zustand einnimmt, wenn die Signalamplitude unterhalb eines Schwellenwertes bleibt, und einen zweiten Signalzustand, wenn die Signalamplitude oberhalb eines Schwellenwertes liegt. Der Schwellenwert ist so gewählt, daß er kleiner ist als das beim Passieren einer der Marken 16 oder 17 auftretende Signal und größer ist als das Signal, das sich ergibt, wenn sich eine nicht bzw. nur schwach reflektierende Fläche, wie beispielsweise das Fenster 18, im Bereich des Optoreflektors befindet. Das Ausgangssignal der Schwellenwertschaltung 21 wird einer Steuereinheit 22 zugeführt.

Die Steuereinheit 22 liefert die Steuerimpulse für einen Schrittmotor 5. Bei jedem Steuerimpuls wird der Kassettenwagen also horizontal um einen Schritt verfahren. Nach einer bestimmten Anzahl von Steuerimpulsen hat der Kassettenwagen die Position $x_1$ erreicht. Während die Steuereinheit 22 dann in konstanten zeitlichen Abständen weiterhin Steuerimpulse liefert (der Kassettenwagen also mit konstanter Geschwindigkeit weiterbewegt wird) fragt die Steuereinheit 22 gleichzeitig in konstanten zeitlichen Abständen — wegen der konstanten Geschwindigkeit also jeweils nach einer bestimmten Anzahl von Schritten — den Ausgangszustand des Schwellenwertschalters 21 ab, bis nach einer weiteren Anzahl von Schritten die Position $x_2$ erreicht ist. Somit erhält die Steuereinheit 22 eine Folge von binären Signalwerten (« 1 » oder « 0 »), die ein binäres Signal bilden, das in einem Zwischenspeicher 23 gespeichert wird. Nachdem das Signal wie geschildert vollständig erfaßt worden ist, wird es nacheinander mit einer Reihe von binären Signalen verglichen, die in einem Speicher 24 gespeichert sind und die jeweils dem Signal entsprechen, das sich am Ausgang der Schaltung 21 bei Verwendung jeweils eines der verschiedenen Kassettenformate ergibt. Zeigt sich bei einem der Vergleiche eine Übereinstimmung, dann entspricht das im Zwischenspeicher 23 gespeicherte Signal demjenigen Kassettenformat, dem das beim Vergleich gerade anliegende Signal aus dem Festwertspeicher 24 zugeordnet ist.

Der auf diese Weise ermittelte Wert kann einer Anzeigeeinheit zugeführt werden. Er kann jedoch auch in bekannter Weise zur Positionierung des Kassettenwagens (beim Verfahren aus der Parkstellung nach links in die Aufnahmestellung) oder zur Steuerung von Blenden am Zielgerät oder in der Nähe der mit dem Zielgerät zusammenwirkenden Röntgenröhre dienen.

Die Steuereinheit 22 kann beispielsweise zwei Microprozessoren enthalten, von denen der eine die Steuerung des Kassettenwagens übernimmt und der andere u. a. die Erkennung des Kassettenformates. Beide Funktionen können aber auch von einem einzigen Microprozessor durchgeführt werden.

Die Erfassung der Marken 16, 17 kann auch auf andere Weise erfolgen als vorstehend beschrieben. Wenn beispielsweise die Marken 16 und 17 ferromagnetisches Material enthalten, läßt sich als Sensor eine Hall-Sonde verwenden, die beim Vorbeifahren der Marken anspricht. Ebenso könnten die Marken mit Vorsprüngen versehen sein, die beim Vorbeifahren einen in diesem Fall als Sensor wirkenden Microschalter betätigen. Es ist auch nicht erforderlich, daß die Marken die aus den Fig. 1 und 2 ersichtliche Form haben. Beispielsweise können beide Marken einen Zeiger umfassen. Die Zeiger müssen auch nicht um die gleiche Achse schwenkbar sein.

In allen diesen Fällen ist es aber wichtig, daß die Marken so ausgebildet und angeordnet sind, daß der Sensor beim Vorbeifahren des Kassettenwagens auf die Marken ansprechen kann und daß für jedes der benutzten Kassettenformate die Position wenigstens einer der Marken — gemessen in Richtung des Fahrweges des Kassettenwagens — sich von den Positionen bei allen anderen Kassettenformaten deutlich unterscheidet.

## Patentansprüche

1. Röntgenzielgerät mit einem mit zwei Spannvorrichtungen (9a, 9b ; 13) zum Halten und Messen von Kassetten (11) versehenen Kassettenwagen (2), wobei mit der ersten durch die Kassettenhöhe in ihrer Stellung bestimmten Spannvorrichtung eine erste Marke (16) und mit der zweiten durch die Breite des Kassettenwagens in ihrer Stellung bestimmten Spannvorrichtung (13) eine zweite Marke (17) gekoppelt ist, und mit einer Meßvorrichtung zur Bestimmung des Kassettenformats, die einen auf die Marken (16, 17) ansprechenden Sensor (19) aufweist, an dem die Marken beim Verfahren des Kassettenwagens (2) vorbeifahren, dadurch gekennzeichnet, daß die Spannbacken (9a, 9b) der ersten Spannvorrichtung mit den beiden Armen einer um eine zur Kassettenebene senkrechte Achse (12) schwenkbaren Schwinge (8) derart gekoppelt sind, daß sie gleichmäßig aber gegensinnig zueinander bewegbar sind, daß die erste Marke (16) starr mit der Schwinge (8) verbunden ist und daß die zweite Spannvorrichtung einen um eine zur Kassettenebene senkrechte Achse (12) schwenkbaren Hebel (13) aufweist, der gegen eine vertikale Kante der Kassette (11) drückt und mit dem eine der beiden Marken (17) fest verbunden ist.

2. Röntgenzielgerät nach Anspruch 1, dadurch gekennzeichnet, daß die Schwinge (8) und der Hebel (13) um die gleiche Achse (12) schwenkbar sind.

3. Röntgenzielgerät nach Anspruch 2, dadurch gekennzeichnet, daß die eine Marke die Form eines Zeigers (16) und die andere Marke die Form eines mit einem Ausschnitt (18) versehenen Sektors (17) aufweisen.

4. Röntgenzielgerät nach einem der vorhergehenden Ansprüche, dadurch gekennzeichnet, daß die Marken eine Licht stark reflektierende Oberfläche aufweisen und daß der Sensor eine Lichtquelle und einen Wandler enthält, der das reflektierte Licht in ein elektrisches Signal umsetzt.

5. Röntgenzielgerät nach einem der vorhergehenden Ansprüche, dadurch gekennzeichnet, daß die Meßvorrichtung einen Speicher (24) umfaßt, in dem die Verläufe der Sensorausgangssignale bei verschiedenen Kassettenformaten gespeichert sind, und daß das Format der jeweils eingelegten Kassette durch Vergleich der gespeicherten Verläufe mit dem gemessenen Verlauf ermittelt wird.

## Claims

1. An X-ray positioning apparatus which includes a cassette carriage (2) comprising two clamping devices (9a, 9b ; 13) for holding and measuring cassettes (11), the first clamping device whose position is determined by the height of the cassette comprising a first marker (16), a second marker (17) being coupled to the second clamping device (13) whose position is determined by the width of the cassette carriage, and also includes a measuring device for determining the cassette format which includes a sensor (19) which responds to the markers (16, 17), the markers being guided past said sensor upon displacement of the cassette carriage (2), characterized in that the clamping jaws (9a, 9b) of the first clamping device are coupled to the two arms of a rocking lever (8) which is pivotable about an axis (12) which is perpendicular to the plane of the cassette so that they are displaceable uniformly but in an opposite sense, the first marker (16) being rigidly connected to the rocking lever (8), the second clamping device comprising a lever (13) which is pivotable about an axis (12) extending perpendiculary to the plane of the cassette and which presses against a vertical edge of the cassette (11) and is rigidly connected to one of the two markers (17).

2. An X-ray positioning apparatus as claimed in Claim 1, characterized in that the rocking lever (8) and the lever (13) are pivotable about the same axis (12).

3. An X-ray positioning apparatus as claimed in Claim 2, characterized in that one marker is formed as a pointer (16) whilst the other marker is formed as a sector (17) provided with a cut-out (18).

4. An X-ray positioning apparatus as claimed in any one of the preceding Claims, characterized in that the markers have a surface which is highly reflective for light, the sensor including a light source and a transducer which converts the reflected light into an electric signal.

5. An X-ray positioning apparatus as claimed in any one of the preceding Claims, characterized in that the measuring device includes a memory (24) in which the variations of the sensor output signals for different cassette formats are stored, the format of the relevant inserted cassette being determined by comparison of the variations stored with the variation measured.

**Revendications**

1. Appareil formant cible pour les rayons X comportant un chariot à cassette (2) pourvu de deux dispositifs de serrage (9a, 9b ; 13) destinés à maintenir et à mesurer des cassettes (11), un premier repère (16) étant couplé au premier dispositif de serrage dont la position est déterminée par la hauteur de la cassette et un second repère (17) étant couplé au second dispositif de serrage (13) dont la position est déterminée par la largeur de la cassette, et un dispositif de mesure pour déterminer le format de la cassette, qui comporte un détecteur (19) réagissant aux repères (16, 17), devant lequel les repères passent lors du déplacement du chariot à cassette (2), caractérisé en ce que les mâchoires de serrage (9a, 9b) du premier dispositif de serrage sont couplées aux deux bras d'une bielle oscillante (8) pouvant pivoter autour d'un axe (12) perpendiculaire au plan de la cassette d'une manière telle qu'elles puissent être déplacées dans la même mesure, mais en sens opposés, que le premier repère (16) est relié rigidement à la bielle oscillante (8) et que le second dispositif de serrage comporte un levier (13) pouvant pivoter autour d'un axe (12) perpendiculaire au plan de la cassette, qui appuie contre un bord vertical de la cassette (11) et est relié rigidement à un des deux repères (17).

2. Appareil formant cible pour les rayons X suivant la revendication 1, caractérisé en ce que la bielle oscillante (8) et le levier (13) peuvent pivoter autour du même axe (12).

3. Appareil formant cible pour les rayons X suivant la revendication 2, caractérisé en ce qu'un repère a la forme d'une aiguille (16) et l'autre, d'un secteur (17) présentant une découpe (18).

4. Appareil formant cible pour les rayons X suivant l'une quelconque des revendications précédentes, caractérisé en ce que les repères présentent une surface réfléchissant fortement la lumière et le détecteur contient une source lumineuse et un transducteur qui convertit la lumière réfléchie en un signal électrique.

5. Appareil formant cible pour les rayons X suivant l'une quelconque des revendications précédentes, caractérisé en ce que le dispositif de mesure comprend une mémoire (24) dans laquelle sont stockées les allures des signaux de sortie de détecteur pour divers formats de cassettes, et que le format de la cassette introduite est chaque fois déterminé par comparaison des allures stockées avec l'allure mesurée.

Fig.1

Fig.2

Fig.3

Fig.4